# EUROPEAN PATENT SPECIFICATION

(11) **EP 4 046 775 B1**
(45) Date of publication and mention of the grant of the patent: **06.08.2025**
(21) Application number: 21158159.0
(22) Date of filing: 19.02.2021
(51) Int. Cl.: B29C 59/02, B44C 1/24, A45D 34/00, B44B 5/02

(54) **PROCESS FOR SURFACE DECORATION AND ARTICLE OBTAINED BY SAID PROCESS**
VERFAHREN ZUR OBERFLÄCHENDEKORATION UND NACH DIESEM VERFAHREN HERGESTELLTER GEGENSTAND
PROCÉDÉ DE DÉCORATION DE SURFACE ET ARTICLE OBTENU PAR LEDIT PROCÉDÉ

(43) Date of publication of application: 24.08.2022
(73) Proprietor: GEKA GmbH, 91572 Bechhofen (DE)
(72) Inventor: BURKHARD, Samuel, 91572 Bechhofen (DE)
(74) Representative: Misselhorn, Hein-Martin

(56) References cited:
- US-A1- 2008 160 275
- US-A1- 2015 298 491

## Description

### BACKGROUND OF THE INVENTION

The present invention relates to a process for modifying a plastic surface comprised in a product part, an article comprising a plastic surface modified by the inventive process and a cosmetic package comprising said article.

Structured decoration (three dimensional) in plastic surfaces is used for making the products comprising said decoration more appealable to the public. For example, decoration is used typically on a wide variety of consumer products such as cosmetic products, automobile parts, home appliance and electronic articles.

Generally, in order to add a structured decoration to the plastic surfaces, the required decoration is engraved in the mold to be used to produce the plastic surface. For example, molds having the engraved decoration are commonly used in injection molding process for the production of the plastic surfaces. When a new or different decoration on the plastic surface is required a new mold or new inserts having the new/different decoration are then needed, resulting in a very expensive, time consuming and unpractical process.

A significant disadvantage of the present processes for the preparation of plastic surfaces having a structured decoration is the time and investment required for the production of each mold having a specific engraved decoration and the low versatility of the current process in regards to decoration, for example it is not possible to achieve shiny-metallized and matte-metallized surfaces with current processes.

Other current processes used for the decoration of plastic surfaces are process that print a decoration on the plastic surface. However, the decoration is only printed and does not add a structured decoration to the plastic surface.

Additionally, this type of process typically requires the use of solvents and inks. For example, US4175993A discloses a process for the decoration of cylindrical surfaces that is based on the printing of the decoration on the surface by means of pressing an indicia-carrying foil between the surface and a die having the wished decoration. However, this process does not provide a structured decoration of the surface and requires an indicia-carrying foil.

US 2015/298491 A1, which discloses a process for modifying a plastic surface comprised in a product part according to the preamble of claim 1, discloses a hot-stamping device having a stamping device for transferring a transfer layer disposed on a carrier layer of a hot-stamping foil on to a substrate, comprising a heatable stamping roller and a counter-pressure roller, between which a stamping gap is realized, and comprising a separating device, disposed downstream, for separating the carrier layer from the transfer layer transferred on to the substrate. This device to be used in a hot-stamping process. However, the device and therefore the process requires a carrier layer of hot-stamping foil.

Structured decorations having raised decorative surfaces may be produced by vertical hot stamping or hot roller embossing to transfer a coating with a desired décor to a molded plastic part as a substrate. For example, EP3233491B1 discloses a method for producing a polymeric vehicle attachment part with a decorative element, wherein (a) a polymeric injection molded attachment part is prepared, (b) a decorative element is transferred from a carrier film onto a first surface of the attachment part by hot stamping using a stamp and (c) at least the first surface is provided with a protective coating (3). However, this process requires the transfer of a decorative element which is attached to a carrier film, the application of a protective coating over the decorated part, and finally a trimming of the decoration and coating. Another related process is IPD-skin^{®} from Leonhard Kurz. In this 'Individual Post Decoration' (IPD) process, the parts are first molded and a 'Skin' or thin decorative coatings is applied on the substrate precisely positioned in a mold insert in a precisely-controlled low temperature vacuum process, followed by a trimming in a second machine. Thus this IPD-skin process also requires a coating and precise controlled positioning, temperature, and vacuum control, as well as post-decoration trimming processes. US4837072 shows an example of such an embossing film (decorative coating) having a three dimensional patterning.

Therefore, it is desirable to provide a process capable to overcome the above-mentioned problems, especially a more efficient, cost effective, fast, solvent- and ink-free and carrier-film-free process that can produce structured decoration on plastic surfaces without the limitation of different molds and its related costs and time needed for the production of said molds.

### SUMMARY

Starting from this state of the art, it is an object of the invention to provide a process that produces the decoration of a plastic surface in a more practical, economic and faster way than current processes.

According to the present invention, these objects are achieved by a process for modifying a plastic surface (1) comprised in a product part (2), the process comprising the steps of:
a) mounting a die (3) into a heating printing machine,
b) heating the die (3),
c) bringing the die (3) in contact with the plastic surface (1) of the product part (2) to modify said surface (1),
wherein the die (3) is made of a silicone rubber material and the die has a surface structure (4) comprising embossed areas (4b), wherein the mean roughness depth (Rz) value of the surface of the die (3) is of less than about 250 µm.

The inventors have surprisingly found that the process according to the present invention allows the preparation of a variety of structured decorations on plastic surfaces without the need for different molds for producing the different decorated plastic surface. The inventors have found that by using the inventive process, the structured decoration of plastic surfaces is carried out faster and cheaper than the current processes and without the need for films and their complex transfer and trimming processes. The inventors have also found that the inventive process here allows the preparation of more defined structured decoration on plastic surfaces due to the ability to readily generate appropriate micro-structured surfaces on the silicone rubber die.

US4175993A differs from the present invention as it does not relate to structured decoration on plastic surfaces themselves but instead it concerns the decoration of surfaces by means of pressing an indicia-carrying foil between the surface and a die having the wished decoration. US 2015/298491 A1 differs from the present invention as it does not relate to direct structured decoration on plastic surfaces but instead it concerns the decoration of surfaces by means of transferring a transfer layer disposed on a carrier layer of a hot-stamping foil on to a substrate by the action of temperature and pressure. Additionally, US 2015/298491 A1 does not disclose a process for modifying a plastic surface by means of a silicon rubber die that has a surface structure comprising embossed areas with a mean roughness depth (Rz) value of the surface of the die (3) of less than about 250 µm, as measured according to DIN EN ISO 4287. EP3233491B1 discloses a method for producing a polymeric vehicle attachment part with a decorative element, by transferring the decorative element which is attached to a carrier film by stamping the carrier film on the surface with a stamp. Both US4175993A1 and EP3233491B1 require the presence of a carrier film and of an indicia or a decorative element to be added on the surface to be decorated in their respective processes. The inventive process here does not require a carrying film nor an indicia or a decorative element on the carrying film for the decoration of a surface. The inventive process here provides a process where solvent, indicia, ink and/or a carrier film are not required in the decoration of a plastic surface. Additionally, the present inventive process provides a more efficient, faster, cost effective process for the decoration of a plastic surface. Additionally, this inventive process provides the possibility of creating more precise and defined structured decoration due to the type of micro-structured surface of the of silicone rubber die used in said process.

The present invention also relates to an article comprising a modified plastic surface obtainable, preferably obtained by the process according to the invention.

### BRIEF DESCRIPTION OF THE DRAWINGS

The invention will be explained in more detail hereinafter with reference to various embodiments of the invention as well as to the drawings. The schematic drawings show the following:

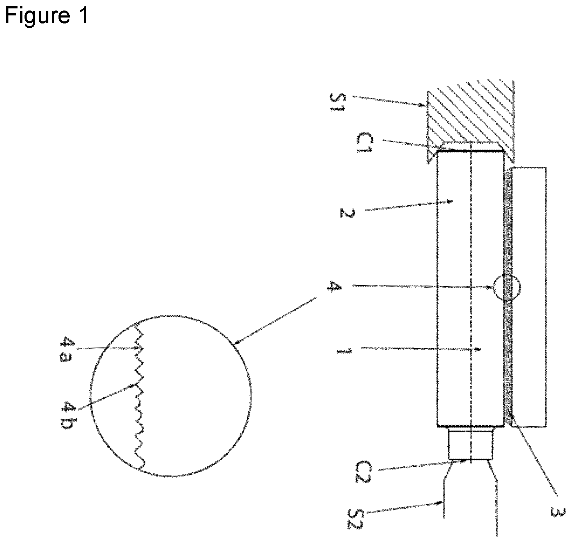

Figure 1 shows one example of the inventive process in which the product part (2) is loaded by holding the product part (2) between the centers (C1) and (C2) of said product part (2) by means of the supports (S1) and (S2).

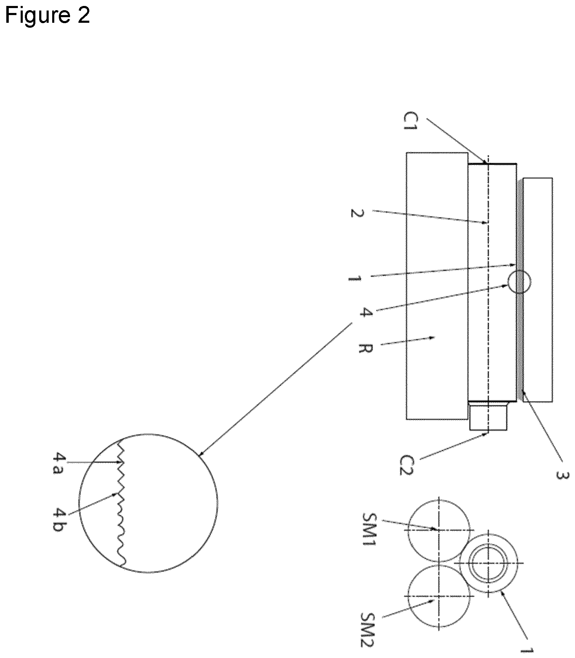

Figure 2 shows one example of the inventive process in which the product part (2) is supported on a roller set (R) and is hold by two supporting means (SM1) and (SM2).
Figure 3 shows and example of the inventive process in which a cylindrical die (3") is rolled over a flat plastic surface (1) of the product part (2) to modify said surface (1).

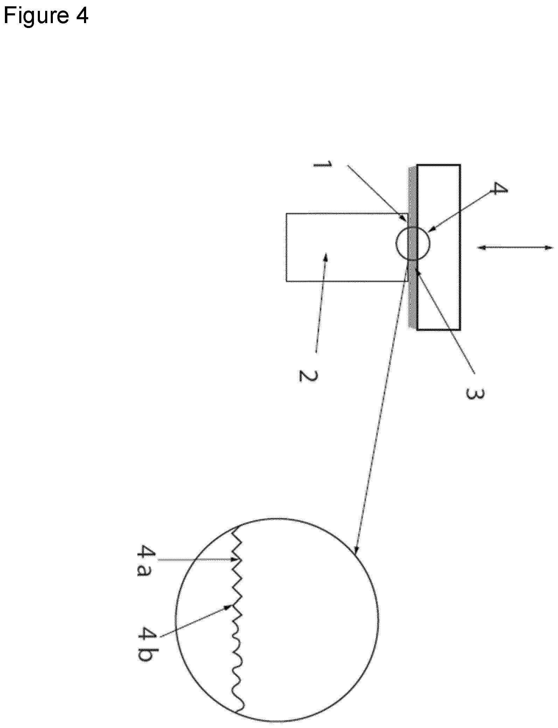

Figure 4 shows another example of the inventive process in which the step (c) of bringing the die (3) in contact with the plastic surface (1) of the product part (2) to modify said surface (1) is carried out by pressing the surface structure (4) of the silicone rubber die (3) on a flat plastic surface (1) of the product part (2).

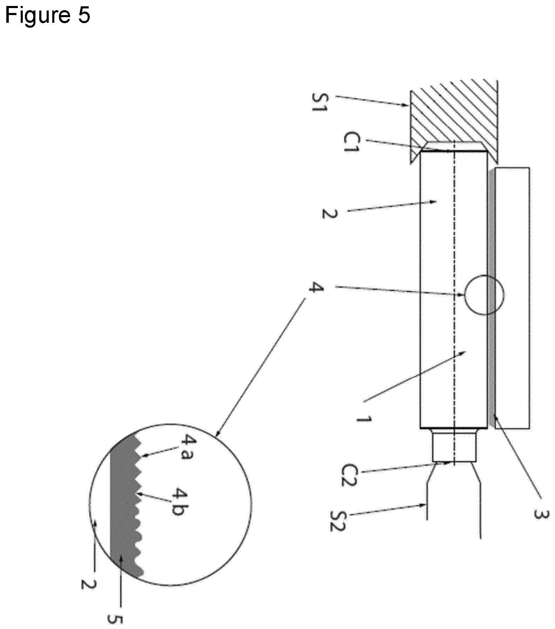

Figure 5 shows an example of the inventive process in which the plastic surface (1) comprised on the product part (2) is a plastic film (5) covering at least one part of the original surface of the product part (2).

### DEFINITIONS

As used in the specification and claims of this application, the following definitions, should be applied:
"a", "an", and "the" as an antecedent may refer to either the singular or plural unless the context indicates otherwise.
"Silicone rubber" is an elastomer (rubber-like material) composed of silicone itself a polymer-containing silicon together with typically at least carbon, hydrogen, and oxygen. Silicone rubbers are often one- or two-part polymers, and may contain fillers or additives to improve their properties. Examples of silicone rubber materials are polysiloxanes and polydimethylsiloxanes based materials. The silicone rubber materials may be homopolymer or copolymer based silicone rubbers.
"Plastic" typically are a wide range of synthetic or semisynthetic materials, that usually use a polymers as a main ingredient. An array of plastic variants is made from renewable materials. Plastics are malleable and so can be molded into solid objects. Common plastics for packaging applications include High Density Polyethylene (HDPE), Low Density Polyethylene (LDPE), Linear Low Density Polyethylene (LLDPE), Polyethylene Terephthalate (PET, PETE), Polypropylene (PP), Polystyrene, and Polyvinyl Chloride (PVC), Polylactic Acid (PLA), thermoplastically modified starch (TPS), Cellulose-based plastics, and their blends.

The melting temperature or "melting range" is the temperature range over which plastics such as crystalline or semicrystalline polymers lose their crystalline characteristics or particulate shape when heated and may be determined by capillary tube and polarizing-microscope methods according to ISO 3146:2000.

"mean roughness depth (Rz)" is the mean value of the five Rzᵢ values from the five sampling lengths Lᵢ within the evaluation Length as measured according to is DIN EN ISO 4287.

"Mounting" is a physical fixing by fitting, placing, setting or positioning, and it is not specifically limited. Mounting may be done by conventional means such as mechanically by clamps, screws or bolts, or chemically by means of glues or adhesives.

"Flat plastic surface" is a plastic surface that has a continuous horizontal level surface, optionally level, even and planar on a local or global level, preferably one that is smooth or even and without marked projections or depressions. The "Flat plastic surface" may be globally part of various different geometric shapes, such as, for example, round, hollow round, oval, star-shaped, square, rectangular, X-shaped or triangular. Thus the product or its product part, such as a bottle or cap or packaging may overall itself have one of these various different geometric shapes, and the plastic surface on the product or its part to be decorated will be flat.

"Modifying the plastic surface of a product part" means to modify the visual appearance and/or haptic design through the surface topology, morphology, texture or finish (e.g. matt versus gloss) or color of said surface, for example, by physical hot printing or stamping, as opposed to chemical modifications. In other words, the plastic surface is modified by means of a three-dimensional or textured decoration.

"Heating" means the process of making something warm and is not specifically limited. Examples of heating may be increasing the average temperature of the surface of the die by about 100 to about 300°C. The die may be heated by conventional methods known in the art such as ambient or electrical heating or by thermal radiation or by heat transfer from heated fluids such as liquids, air or gas.

"Covering" means that the plastic film is typically placed on the top at least one part of the original surface of the product and typically bonded to said surface.

"Original surface of the product" means the surface of the product as it was originally produced by for example by molding. The original surface of the product can be made of, for example, plastic, metal, wood or glass. In case a plastic film is covering the original surface of the product and when the original surface of the product is made of plastic, the original surface of the product can be made of the same plastic material or made of different plastic material than the plastic film.

Numerical values in the present application relate to average values. Furthermore, unless indicated to the contrary, the numerical values should be understood to include numerical values which are the same when reduced to the same number of significant figures and numerical values that differ from the stated value by less than the experimental error of the conventional measurement technique of the type described in the present application to determine the value.

### GENERAL DESCRIPTION OF THE INVENTION

The process for modifying a plastic surface (1) comprised in a product part (2), according to the present invention comprises the steps of:
a) mounting a die (3) into a heating printing machine,
b) heating the die (3),
c) bringing the die (3) into contact with the plastic surface (1) of the product part (2) to modify said surface (1),
wherein the die (3) is made of a silicone rubber material and the die has a surface structure (4) comprising embossed areas (4b), wherein the mean roughness depth (Rz) value of the surface of the die (3) is of less than about 250 µm, as measured according to DIN EN ISO 4287. Preferably, the mean roughness depth (Rz) value of the surface of the die (3) is of less than about 150 µm, as measured according to DIN EN ISO 4287. Said value of the mean roughness depth (Rz) is advantageous because it allows to add a partial matte decoration effect on the plastic surface (1), which means to have a combination of matte and shiny decoration effect. More preferably, the mean roughness depth (Rz) value of the surface of the die (3) is of less than about 75 µm, as measured according to DIN EN ISO 4287. Said value of the mean roughness depth (Rz) is advantageous because it allows to add a matte decoration effect all over the plastic surface (1).

In some embodiments the die (3) is made of a silicone rubber material and the die has a surface structure (4) comprising embossed areas (4b), wherein the distance from the average embossed area height (4b) to the average background area depth (4a) of the die (3) is of less than about 250 µm, preferably 150 µm, more preferably 75 µm. In many embodiments of the die (3), an arithmetical mean height, Sa, of one or more, or even all, embossed areas (4b) is easily measurable, for example, because the highest elevated regions will all have the same height or only a few different heights. Thus in many embodiments of the die (3) in the present invention, the height represents between the reference surface and each point on the scale-limited surface, and the reference plane may in various embodiments be an adjacent non-embossed area of the die or the deepest or average background depth of the embossed area. Thus in many embodiments of the die (3) of the present invention the arithmetical mean height, Sa, of one or more, or even all, embossed areas (4b) will be less than about 250 µm, preferably 150 µm, more preferably 75 µm. In still other embodiments, the maximum height (distance between the highest point and the lowest point on the surface), Sz, or the maximum peak height (maximum value of height from the mean plane of the surface), Sp, of one or more, or even all, embossed areas (4b) will be less than about 250 µm, preferably 150 µm, more preferably 75 µm. Measurement of these various heights and depths, as well as the various other surface texture parameters may be made by contact methods (e.g. stylus, as in ISO 13565-1) or non-contact methods (optical probe), or their combination in dual methods, as in ISO 25178. Contact measurement methods may be carried out using a contact-type roughness tester (stylus) or an atomic force microscope and non-contact measurement methods may be carried out using a white light interferometer or a laser microscope.

Additional advantages of the process according to the present invention are that no solvent and/or inks are required in said process, which means that the decorated product part can be readily taken and processed or handled further just after the surface decoration step. Therefore, the process increases the output and throughput for mass-decorated product parts.

Additionally, no carrier-film is needed in this process, which reduces cost and complexity.

Examples of heating printing, hot embossing and hot stamping machines generally used in the process according to the invention are hot stamping machines like hand lever operated machines, pneumatic direct acting machines, pneumatic and hydraulic hybrid machines, pneumatic and mechanical toggle and wedge machines, machines with electronic servo-driven presses and multi-axis decorating centers; and pneumatic and servo-driven hybrid machine. Preferred heat printing machine is the pneumatic and servo-driven hybrid machine. This type of pneumatic and servo-driven hybrid machine is very advantageous because it allows to control the distance between the die (3) and the product part (2) and as a consequence allows to control the printing force applied on the die (3) for carrying out the printing, providing a better structured decoration quality, compared to other heat printing machines.

Other examples of heat printing machines comprise the following functions: a device to clamp the product part (2), an axis to move the product part (2) under the die (3), an axis to rotate the product part (2) when said part is clamped between its ends, a heating unit to heat the die (3), a controlling system for putting the product part (2) in contact with the die (3), by for example, adjusting a printing force to be applied on the die (3) or setting a specific distance between the product part (2) and the die (3) for carrying out the printing and therefore to produce the structured decoration.

The temperature to which the die (3) is heated in step (b) of the process according to the invention is in the range of about 100 to about 300°C, preferably in the range of about 100 to about 280°C, more preferably in the range of about 100 to about 200°C. The temperature value is typically the temperature measured on the surface of the die (3).

In one embodiment of the present invention the temperature to which the die (3) is heated in step (b) of the process, is measured on the surface of the die (3) by means of thermocouples. This measuring means is very advantageous because the measurement is carried out directly on the surface of the die (3), and because it has a lower cost compared to more sophisticated methods.

In another embodiment of the present invention the temperature to which the die (3) is heated in step (b) of the process, is measured on the surface of the die (3) by means of infrared camera. This means is very advantageous because it allows a more precise measurement of the temperature of the surface of the die (3) and therefore it allows a better adjustment of the required temperature for improving the structured decoration quality.

In one specific embodiment, the temperature to which the die (3) is heated in step (b) of the process according to the invention is in the range of melting temperature of the plastic surface (1) of the product part (2), for example the bulk melting temperature or range of polyethylene is typically in the range of 105 to 180°C, of polypropylene is in the range of 130 to 180°C, of polystyrene is in the range of 220 to 270 °C, of polyethylene-terephthalate is typically in the range of 250 to 300 °C.

In one embodiment of the process according to the present invention, optionally in the step (c) of the process according to the present invention, when the die (3) is brought in contact with the plastic surface (1) of the product part (2) to modify said surface (1), a force is applied on said surface. Generally, the force applied on the plastic surface (1) is in the range of about 0.5 N/mm to about 3 N/mm. Preferably the force applied on the plastic surface (1), when the die (3) is brought in contact with the plastic surface (1) of the product part (2) to modify said surface (1), is in the range of about 1 N/mm to about 2 N/mm. This range is advantageous for producing rough surface structures on the plastic surface (1) and also for producing structured decoration on plastic surfaces made of high melting point materials, for example ABS material.

The die (3) used in the process according to the present invention is made of a silicone rubber material. Examples of silicone rubber materials are polysiloxanes or polydimethylsiloxanes based materials. The silicone rubber materials can be homopolymer or copolymer based silicone rubbers. For example a silicon rubber having a CAS-Nr. of 67/548/EWG.

The silicon rubber die (3) used in the process according to the present invention can comprise a base made of metal onto which the die (3) is normally fixed according to conventional methods for fixing rubbers to metal substrates such as gluing with epoxy or silicone adhesives or an acrylic or a polyurethane.

The silicon rubber material in the present invention generally has a Hardness Shore A Durometer in the range of about 40 to about 90, preferably in the range of about 60 to about 90, most preferred about 90. A Hardness Shore A Durometer value of about 90 allows to achieve better and accurate production of the decoration structure on the surface part (2) due to the hardness of the silicone rubber die (3). The Hardness Shore A Durometer may be measured according to these methods: DIN EN ISO 868, DIN ISO 7619-1 and ASTM D2240-00, preferably an appropriate one selected according to the hardness of the material.

The advantage of the silicone rubber die (3) is that it is able to conform to slight surface variations, imperfections and sinks presented on the plastic surface (1). Additionally, the silicone rubber die (3) is able to make contact with the plastic surface (1) to be decorated at a low pressure or printing force, preventing any damage to the plastic surface, and also has the ability to compensate for surface irregularities allowing excellent repeatability of the decoration to be produced on the plastic surface (1). Additionally, the silicon rubber die (3) can have very fine details to broad areas coverage on the same die (3). Additionally, the silicon rubber die (3) does not need the presence of a plastic film or foil as a carrier film or foil to be able produce a decoration on the plastic surface.

In one embodiment of the process according to the present invention the step (c) of bringing the die (3) in contact with the plastic surface (1) of the product part (2) to modify said surface (1) is carried out by rolling the plastic surface (1) on the surface structure (4) of the silicone rubber die (3). The shape of the plastic surface (1) is not specifically limited and may be substantially cylindrical or curved. When rolling the plastic surface (1) on the surface structure (4) of the silicone rubber die (3), the plastic surface (1) is typically rolled against a die (3) having a shape able to follow the shape of the plastic surface (1). For that purpose, the product part (2) is normally supported on a roller set, on a mandrel or held between centers before being rolled against and across the surface of the die (3).

Figure (1) shows one example of this embodiment where the product part (2) is loaded by holding the product part (2) between the centers (C1 and C2) of said product part (2) by means of two rotatable supports (S1 and S2). The rotational movement of the supports (S1 and S2) then rotates the product part (2) and then rolls the plastic surface (1) against and across the structure (4) of the flat silicone rubber die (3).

Figure (2) shows another example of this embodiment where the product part (2) is supported on the roller set (R) and is held by two supporting means (SM1 and SM2). The rotational movement of the roller set then rotates the product part (2) and then rolls the plastic surface (1) against and across the structure (4) of the flat silicone rubber die (3). This specific example is advantageous for any product parts (2), which tend to bend, for example, due to its material properties or thinness, compared to the previous example where the product part (2) is loaded by holding it between the centers (C1 and C2) of said product part (2) only. The use of a roller set prevents the bending of the product part (2) by supporting one longitudinal side of the product part (2) on the rolls of the roller set and thus providing stability in the decoration step.

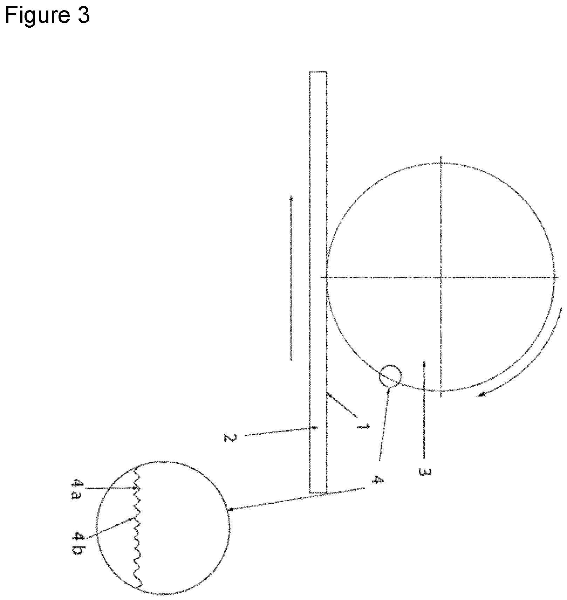

Examples of systems used for rolling the plastic surface (1) on the surface structure (4) of the silicone rubber die (3) are: rotational drives to keep the part rolling across the die without skidding or slipping, multi-axis servo driven peripheral process systems using one axis of the servo to bring the die (3) into contact with the part (2), one axis to provide rotational drive, and one axis to move the rotating product part (2) against the surface structure (4) of the die (3) or methods of linear and rotational drives including air cylinders, hydraulic checked air cylinders, stepper motors, cables, pulleys, and gears. A preferred system for rolling the plastic surface (1) on the surface structure (4) of the silicone rubber die (3) is the rotational drive to keep the part rolling across the die without skidding or slipping. The advantage of this system is that it provides a faster, more precise and more defined surface decoration on the plastic surface (1) compared to other systems. One skilled on the art will understand that other variations for bringing the die (3) in contact with the plastic surface (1) of the product part (2) to modify said surface (1) will be possible, for example, rolling a die (3) which is cylindrical (cylindrical die 3") over a flat plastic surface (1). For that purpose, the cylindrical die (3") is normally supported on a roller set, on a mandrel or held between centers, and then the cylindrical die (3") is normally brought into contact with the surface (1) of the product part (2) by rolling the cylindrical die (3") across the surface (1) of the product part (2). Figure 3 shows one example of this variation.

Examples of systems used for rolling the cylindrical die (3") over a flat plastic surface (1) are: rotational driven to keep the cylindrical die (3") rolling across the plastic surface (1) without skidding or slipping, multi-axis servo driven peripheral process using one axis of servo to bring the cylindrical die (3") into contact with the flat plastic surface (1), one axis to provide rotational drive, and one axis to move the rotating cylindrical die (3") against the flat plastic surface (1) or methods of linear and rotational drives including air cylinders, hydraulic checked air cylinders, stepper motors, cables, pulleys, and gears.

A preferred system for rolling the cylindrical die (3") over a flat plastic surface (1) is rotational driven to keep the cylindrical die (3") rolling across the plastic surface (1) without skidding or slipping. The advantage of this system is that it provides a faster, more precise and more defined surface decoration on the plastic surface (1) compared to other systems. In another embodiment of the process according to the present invention the step (c) of bringing the die (3) in contact with the plastic surface (1) of the product part (2) to modify said surface (1) is carried out by pressing the surface structure (4) of the silicone rubber die (3) on a flat plastic surface (1) of the product part (2). The geometric shape comprising the flat plastic surface is not specifically limited and may be round, hollow round, oval, star-shaped, square, rectangular, X-shaped or triangular. Figure (4) shows one example of this embodiment where the product part (2) is fixed and then the die (3) is pressed against the plastic surface (1) of the product part (2). Normally the pressing of the die (3) against the plastic surface (1) of the product part (2) is carried out by one movement down of the die (3) to press, and then by one movement up to stop the pressing of the die (3) against the plastic surface (1) of the product part (2). The fixing of the product part (2) is normally carried out by fixing means, for example clamps; however, any other fixing means are possible.

In another embodiment of the process according to the present invention the plastic surface (1) comprised on the product part (2) is a plastic film (5) covering at least one part of the original surface of the product part (2). The plastic film (5) can be a mono-layer film or a multi-layer film or coating. The plastic film (5) normally comprises or is made of one of the following materials: polyethylene, polypropylene, polyester, polycarbonate, polystyrene, polyacrylate, polyethylene-terephthalate or polyethylene terephthalate comprising post-consumer recycled polyethylene terephthalate.

The plastic film (5) preferably comprises or is made of:
- polypropylene because of its advantageous recycling properties and better hardness surface properties which allow a more defined surface decoration on the surface.
   or
- polyethylene terephthalate or post-consumer recycled polyethylene terephthalate because of its advantageous recycling properties and durability against scratches.

The plastic film (5) is typically bonded to the original surface of the product part (2) by gluing, molding, over-molding, UV-curing or ultrasonic welding of the plastic film. Figure (5) shows one example of this embodiment where the product part (2) is hold between the centers (C1 and C2) of said product part (2) by means of two rotatable supports (S1 and S2). The rotational movement of the supports then rotates the product part (2) and then rolls the plastic film (5), bonded on the original surface of the product part (2), against and across the structure (4) of the flat silicone rubber die (3).

In another embodiment of the process according to the invention, the plastic surface (1) comprised on the product part (2) comprises a partially color decorated surface and/or a metallized surface. Typically, the color decoration and the metallization steps take place prior to step (c) of the process according to the present invention. The plastic surface (1) comprised on the product part (2) can comprise a color-decorated surface or a metallized surface or a mixture thereof. The plastic surface (1) comprised on the product part (2) can also be completely covered by a color-decorated surface or by a metallized surface. A color-decorated surface on the plastic surface (1) provides an excellent color effect. A metallized surface on the plastic surface (1) provides an even better color effect compared to the color-decorated surfaces due to the light refraction effect on its metallized finishing.

Examples of color materials used in the color decoration of the plastic surface (1) comprised on the product part (2) are pigments and varnish.

Examples of metallizing materials used in the metallization of the plastic surface (1) comprised on the product part (2) is aluminium and chrome.

In another embodiment of the process according to the invention the plastic surface (1) comprised on the product part (2) is made of a thermoplastic material, preferably made of polyethylene, polypropylene, polyester, polycarbonate, polystyrene, polyacrylate, polyethylene-terephthalate or polyethylene terephthalate comprising post-consumer recycled polyethylene terephthalate.

The present invention also relates to an article comprising a modified plastic surface (1) obtainable, preferably obtained by the process according to the invention.

Examples of articles comprising a modified plastic surface (1) obtainable, preferably obtained by the process according to the invention are a bottle, a container or a cap, a plate, a box, a home appliance article, an automotive article, an electronic article, a medical article, a card, a cosmetic or a healthcare article. Preferred cosmetic or healthcare articles are a bottle, a cap, a cosmetic case, an applicator and a stem.

The present invention also relates to a cosmetic package comprising a cosmetic or healthcare article according to the invention.

One skilled in the art will understand that the combination of the subject matters of the various claims and embodiments of the invention is possible without limitation in the invention to the extent that such combinations are technically feasible. In this combination, the subject matter of any one claim may be combined with the subject matter of one or more of the other claims. In this combination of subject matters, the subject matter of any one process claim may be combined with the subject matter of one or more other process claims. One skilled in the art will understand that such combinations may also pertain to article claims, cosmetic article claims, use claims or their combinations. By way of example, the subject matter of any one claim may be combined with the subject matters of any number of the other claims without limitation to the extent that such combinations are technically feasible.

While various embodiments have been set forth for the purpose of illustration, the foregoing descriptions should not be deemed to be a limitation on the scope herein. Accordingly, various modifications, adaptations, and alternatives can occur to one skilled in the art without departing from the scope herein. The invention is defined in the appended claims.

### Reference Numbers

1 Plastic surface
2 Product part
3 Die (Silicone rubber die 3')
3" Cylindrical die
4 Surface structure of the die (3), silicone rubber die (3') or cylindrical die (3")
4a Background area
4b the top of the embossed areas
5 Plastic film

### Reference Signs

Center (C1)
Center (C2)
Roller set (R)
Support (S)
Supports (S1), (S2)
Supporting Means (SM1) (SM2)

## Claims

1. A process for modifying a plastic surface (1) comprised in a product part (2), the process comprising the steps of:
a) mounting a die (3) into a heating printing machine,
b) heating the die (3),
c) bringing the die (3) in contact with the plastic surface (1) of the product part (2) to modify said surface (1), the die (3) being made of a silicon rubber material, **characterized in that** the die (3) has a surface structure (4) comprising embossed areas (4b), wherein the mean roughness depth (Rz) value of the surface of the die (3) is of less than about 250 µm, preferably of less than about 150 µm, more preferably of less than about 75 µm, as measured according to DIN EN ISO 4287.

2. The process according to claim 1, wherein the step (c) of bringing the die (3) in contact with the plastic surface (1) of the product part (2) to modify said surface (1) is carried out by:
a) rolling the plastic surface (1) on the surface structure (4) of the die (3),
or
b) by pressing the surface structure (4) of the die (3) on a flat plastic surface (1) of the product part (2).

3. The process according to claim 1 or 2, wherein the plastic surface (1) comprised on the product part (2) is a plastic film (5) covering at least one part of the original surface of the product part (2).

4. The process according to any one of claims 1 to 3, wherein the temperature to which the die (3) is heated in step (b) of the process is in the range of about 100 to about 300°C, preferably in the range of about 100 to about 280°C, more preferably in the range of about 100 to about 200°C.

5. The process according to any one of claims 1 to 4, wherein the plastic surface (1) comprised on the product part (2) comprises a partially color decorated surface and/or a metallized surface, and wherein the color decoration or metallization step takes place prior to step (c) of the process.

6. The process according to any one of claims 1 to 5, wherein the plastic surface (1) comprised on the product part (2) is made of a thermoplastic material, preferably made of polyethylene, polypropylene, polyester, polycarbonate, polystyrene, polyacrylate, polyethylene-terephthalate or polyethylene terephthalate comprising post-consumer recycled polyethylene terephthalate.

7. The process according to any one of the preceding claims 1 to 6, wherein the heat printing machine is a pneumatic and servo-driven hybrid machine.

8. The process according to any one of the preceding claims 1 to 7, wherein the silicone rubber material of the die (3) has a Hardness Shore A Durometer of about 40 to about 90, preferably about 60 to about 90, more preferably about 90.

9. The process according to any one of the preceding claims 1 to 8, wherein the system for rolling the plastic surface (1) on the surface structure (4) of the die (3) is a rotational drive system to keep the part (2) rolling across the die (3) without skidding or slipping.

10. The process according to any one of claims 1 to 9,
wherein the temperature to which the die (3) is heated in step (b) of the process, is measured on the surface of the die (3) by means of thermocouples.

11. The process according to any one of claims 1 to 3 and 5 to 10, wherein the temperature to which the die (3) is heated in step (b) of the process, is within the bulk melting range of the plastic of the plastic surface (1) of the product part (2).

12. An article comprising a modified plastic surface (1) obtainable by the process according to any one of claims 1 to 11.

13. The article according to claim 12, wherein the article is a bottle, a container or a cap, a plate, a box, a home appliance article, an automotive article, an electronic article, a medical article, or a card.

14. The article according to claim 12, wherein the article is a cosmetic or a healthcare article, preferably a cosmetic or healthcare bottle, a cosmetic or healthcare cap, a cosmetic or healthcare case, a cosmetic or healthcare applicator, or a cosmetic or healthcare stem.

15. A cosmetic package comprising an article according to claim 14.

## Patentansprüche

1. Verfahren zur Modifikation einer Kunststoffoberfläche (1), die in einem Produktteil (2) enthalten ist, wobei das Verfahren die folgenden Schritte umfasst:
a) Einsetzen einer Matrize (3) in eine Heißprägeeinrichtung,
b) Erhitzen der Matrize (3),
c) Inkontaktbringen der Matrize (3) mit der Kunststoffoberfläche (1) des Produktteils (2), um die Oberfläche (1) zu modifizieren, wobei die Matrize (3) aus einem Silikonkautschukmaterial besteht,
**dadurch gekennzeichnet, dass** die Matrize (3) eine Oberflächenstruktur (4) mit geprägten Bereichen (4b) aufweist, wobei die gemittelte Rautiefe (Rz) der Oberfläche der Matrize (3) weniger als etwa 250 µm beträgt, vorzugsweise weniger als etwa 150 µm, besonders bevorzugt weniger als etwa 75 µm, gemessen gemäß DIN EN ISO 4287.

2. Verfahren nach Anspruch 1, wobei der Schritt (c) des Inkontaktbringens der Matrize (3) mit der Kunststoffoberfläche (1) des Produktteils (2) zur Modifikation der Oberfläche (1) erfolgt durch:
a) Abrollen der Kunststoffoberfläche (1) auf die Oberflächenstruktur (4) der Matrize (3),
oder
b) durch Andrücken der Oberflächenstruktur (4) der Matrize (3) auf eine flache Kunststoffoberfläche (1) des Produktteils (2).

3. Verfahren nach Anspruch 1 oder 2, wobei die im Produktteil (2) enthaltene Kunststoffoberfläche (1) eine Kunststofffolie (5) ist, die zumindest einen Teil der ursprünglichen Oberfläche des Produktteils (2) bedeckt.

4. Verfahren nach einem der Ansprüche 1 bis 3, wobei die Temperatur, auf die die Matrize (3) im Schritt (b) erhitzt wird, im Bereich von etwa 100 bis etwa 300 °C liegt, vorzugsweise im Bereich von etwa 100 bis etwa 280 °C, besonders bevorzugt im Bereich von etwa 100 bis etwa 200 °C.

5. Verfahren nach einem der Ansprüche 1 bis 4, wobei die im Produktteil (2) enthaltene Kunststoffoberfläche (1) eine teilweise farbdekorierte und/oder metallisierte Oberfläche umfasst, und wobei der Farbdekorations- oder Metallisierungsschritt vor Schritt (c) erfolgt.

6. Verfahren nach einem der Ansprüche 1 bis 5, wobei die im Produktteil (2) enthaltene Kunststoffoberfläche (1) aus einem thermoplastischen Material besteht, vorzugsweise aus Polyethylen, Polypropylen, Polyester, Polycarbonat, Polystyrol, Polyacrylat, Polyethylenterephthalat oder Polyethylenterephthalat mit Nach-Verbraucher recyceltem - Polyethylenterephthalat.

7. Verfahren nach einem der vorhergehenden Ansprüche 1 bis 6, wobei die Heißprägeeinrichtung eine pneumatisch und servogesteuerte Hybridmaschine ist.

8. Verfahren nach einem der vorhergehenden Ansprüche 1 bis 7, wobei das Silikonkautschukmaterial der Matrize (3) eine Shore A Härte von etwa 40 bis etwa 90, vorzugsweise etwa 60 bis etwa 90, besonders bevorzugt etwa 90 aufweist.

9. Verfahren nach einem der vorhergehenden Ansprüche 1 bis 8, wobei das System zum Abrollen der Kunststoffoberfläche (1) über die Oberflächenstruktur (4) der Matrize (3) ein Rotationsantriebssystem ist, um das Teil (2) ohne Rutschen oder Gleiten über die Matrize (3) abzurollen.

10. Verfahren nach einem der Ansprüche 1 bis 9, wobei die Temperatur, auf die die Matrize (3) im Schritt (b) erhitzt wird, mittels Thermoelementen an der Oberfläche der Matrize (3) gemessen wird.

11. Verfahren nach einem der Ansprüche 1 bis 3 und 5 bis 10, wobei die Temperatur, auf die die Matrize (3) im Schritt (b) erhitzt wird, im Bereich des Schmelzbereichs des Kunststoffmaterials der Kunststoffoberfläche (1) des Produktteils (2) liegt.

12. Artikel mit einer modifizierten Kunststoffoberfläche (1) wie sie durch das Verfahren nach einem der Ansprüche 1 bis 11 erhalten werden kann.

13. Artikel nach Anspruch 12, wobei der Artikel eine Flasche, ein Behälter oder ein Deckel, eine Platte, eine Box, ein Haushaltsgerät, ein Automobilartikel, ein Elektronikartikel, ein Medizinartikel oder eine Karte ist.

14. Artikel nach Anspruch 12, wobei der Artikel ein Kosmetik- oder Gesundheitsartikel ist, vorzugsweise eine Kosmetik- oder Gesundheitsflasche, ein Kosmetik- oder Gesundheitsdeckel, ein Kosmetik- oder Gesundheitsgehäuse, ein Kosmetik- oder Gesundheitsapplikator oder ein Kosmetik- oder Gesundheitsstiel.

15. Kosmetikpaket, umfassend einen Artikel gemäß Anspruch 14.

## Revendications

1. Procédé de modification d'une surface plastique (1) faisant partie d'un élément de produit (2), le procédé comprenant les étapes suivantes :
a) montage d'un moule (3) dans une machine d'estampage à chaud,
b) chauffage du moule (3),
c) mise en contact du moule (3) avec la surface plastique (1) de l'élément de produit (2) afin de modifier ladite surface (1), le moule (3) étant fabriqué en matériau de caoutchouc de silicone,
**caractérisé en ce que** le moule (3) présente une structure de surface (4) comprenant des zones en relief (4b), la valeur de la profondeur moyenne de rugosité (Rz) de la surface du moule (3) étant inférieure à environ 250 µm, de préférence inférieure à environ 150 µm, plus préférablement inférieure à environ 75 µm, mesurée selon la norme **DIN EN** ISO 4287.

2. Procédé selon la revendication 1, dans lequel l'étape (c) de mise en contact du moule (3) avec la surface plastique (1) de l'élément de produit (2) pour modifier ladite surface (1) est réalisée :
a) soit en faisant rouler la surface plastique (1) sur la structure de surface (4) du moule (3),
b) soit en pressant la structure de surface (4) du moule (3) contre une surface plastique plane (1) de l'élément de produit (2).

3. Procédé selon la revendication 1 ou 2, dans lequel la surface plastique (1) présente sur l'élément de produit (2) est un film plastique (5) recouvrant au moins une partie de la surface d'origine de l'élément de produit (2).

4. Procédé selon l'une quelconque des revendications 1 à 3, dans lequel la température à laquelle le moule (3) est chauffé à l'étape (b) se situe entre environ 100 et environ 300 °C, de préférence entre environ 100 et environ 280 °C, plus préférablement entre environ 100 et environ 200 °C.

5. Procédé selon l'une quelconque des revendications 1 à 4, dans lequel la surface plastique (1) présente sur l'élément de produit (2) comprend une décoration colorée partielle et/ou une surface métallisée, et dans lequel l'étape de décoration ou de métallisation précède l'étape (c) du procédé.

6. Procédé selon l'une quelconque des revendications 1 à 5, dans lequel la surface plastique (1) présente sur l'élément de produit (2) est composée d'un matériau thermoplastique, de préférence en polyéthylène, polypropylène, polyester, polycarbonate, polystyrène, polyacrylate, polyéthylène téréphtalate ou polyéthylène téréphtalate contenant du polyéthylène téréphtalate recyclé post-consommation.

7. Procédé selon l'une quelconque des revendications précédentes 1 à 6, dans lequel la machine d'estampage à chaud est une machine hybride à commande pneumatique et servo-motorisée.

8. Procédé selon l'une quelconque des revendications précédentes 1 à 7, dans lequel le matériau de caoutchouc de silicone du moule (3) a une dureté Shore A comprise entre environ 40 et environ 90, de préférence entre environ 60 et environ 90, plus préférablement d'environ 90.

9. Procédé selon l'une quelconque des revendications précédentes 1 à 8, dans lequel le système permettant de faire rouler la surface plastique (1) sur la structure de surface (4) du moule (3) est un système d'entraînement rotatif permettant à la pièce (2) de rouler sur le moule (3) sans déraper ni glisser.

10. Procédé selon l'une quelconque des revendications 1 à 9, dans lequel la température à laquelle le moule (3) est chauffé à l'étape (b) est mesurée à la surface du moule (3) à l'aide de thermocouples.

11. Procédé selon l'une quelconque des revendications 1 à 3 et 5 à 10, dans lequel la température à laquelle le moule (3) est chauffé à l'étape (b) se situe dans la plage de fusion en vrac du plastique de la surface plastique (1) de l'élément de produit (2).

12. Article comprenant une surface plastique modifiée (1) qui peut être obtenu par le procédé selon l'une quelconque des revendications 1 à 11.

13. Article selon la revendication 12, dans lequel l'article est une bouteille, un récipient ou un bouchon, une plaque, une boîte, un appareil électroménager, un article automobile, un article électronique, un article médical ou une carte.

14. Article selon la revendication 12, dans lequel l'article est un article cosmétique ou de santé, de préférence une bouteille, un bouchon, un étui, un applicateur ou une tige cosmétique ou de santé.

15. Pacquet cosmétique comprenant un article selon la revendication 14
